# EUROPÄISCHE PATENTSCHRIFT

(11) **EP 4 544 099 B1**
(45) Veröffentlichungstag und Bekanntmachung des Hinweises auf die Patenterteilung: **04.03.2026**
(21) Anmeldenummer: 23753916.8
(22) Anmeldetag: 09.08.2023
(51) Int. Cl.: C25B 1/04, C25B 15/00

(54) **VERFAHREN ZUM BETREIBEN EINER ELEKTROLYSEANLAGE**
METHOD FOR OPERATING AN ELECTROLYSIS SYSTEM
PROCÉDÉ DE FONCTIONNEMENT D'UNE INSTALLATION D'ÉLECTROLYSE

(30) Priorität: 18.08.2022 DE 102022208558
(43) Veröffentlichungstag der Anmeldung: 30.04.2025
(73) Patentinhaber: Siemens Energy Global GmbH & Co. KG, 81739 München (DE)
(72) Erfinder: BARTMANN, Andreas, 91056 Erlangen (DE); SCHUMANN, Sven, 91452 Wilhermsdorf (DE)
(86) Internationale Anmeldenummer: PCT/EP2023/072032
(87) Internationale Veröffentlichungsnummer: WO 2024/037942

(56) Entgegenhaltungen:
- CN-A- 113 122 879
- VARELA CHRISTOPHER ET AL: "Modeling alkaline water electrolysis for power-to-x applications: A scheduling approach", INTERNATIONAL JOURNAL OF HYDROGEN ENERGY, vol. 46, no. 14, 2 January 2021 (2021-01-02), AMSTERDAM, NL, pages 9303 - 9313, XP093143677, ISSN: 0360-3199, DOI: 10.1016/j.ijhydene.2020.12.111
- MATUTE G ET AL: "Multi-state techno-economic model for optimal dispatch of grid connected hydrogen electrolysis systems operating under dynamic conditions", INTERNATIONAL JOURNAL OF HYDROGEN ENERGY, ELSEVIER, AMSTERDAM, NL, vol. 46, no. 2, 27 October 2020 (2020-10-27), pages 1449 - 1460, XP086426688, ISSN: 0360-3199, [retrieved on 20201027], DOI: 10.1016/J.IJHYDENE.2020.10.019

## Beschreibung

### TECHNISCHES GEBIET

Die Erfindung betrifft ein Verfahren zum Betreiben einer Elektrolyseanlage. Erforderlich zur Durchführung des Verfahrens sind Hilfssysteme sowie eine Elektrolyseeinheit. Weiterhin wird im Verfahren berücksichtigt, dass die der Elektrolyseanlage zur Verfügung stehende Energie von einer Stromquelle bezogen wird, welche eine Leistung in unregelmäßigen Abstanden in unterschiedlicher Höhe bereitstellt.

### HINTERGRUND ZUR ERFINDUNG

Die Hilfssysteme und die Elektrolyseeinheit benötigen jeweils spezifische, von der Bauart abhängige Zeitspanne, um vom ausgeschalteten Zustand in den jeweiligen eingeschalteten Zustand mit konstantem Betrieb zu wechseln. Dabei ist vor dem Start der Elektrolyseeinheit ein Starten der Hilfssysteme erforderlich. Anschließend erfolgt, sofern genügend Leistung zur Verfügung gestellt wird, der Start der Elektrolyseeinheit.

Es ist bekannt, dass regenerative Energien (Sonne, Wind, usw.) häufig an Orten zur Verfügung stehen, an denen der Bedarf jedoch sehr gering ist. Dies führt zur Notwendigkeit die Energie vom Ort der Gewinnung an den Ort mit dem Bedarf an Energie zu bringen. Dabei wird in vielen Fällen regenerative Energie in Form von Strom gewonnen, beispielsweise durch Solarparks oder durch Windkraftanlagen. Ist eine große Entfernung zwischen der Erzeugung und dem Verbrauch zu überbrücken, so bietet es sich an, mit dem regenerativ gewonnenen Strom durch Elektrolyse speicherbaren und leichter transportierbaren Wasserstoff zu erzeugen. Nachteilig ist dabei die nicht konstante, von der Stromquelle zur Verfügung gestellte Leistung.

Bei bekannten Verfahren zum Betreiben einer Elektrolyseanlage wird daher laufend die zu erwartende Leistung der Stromquelle ermittelt.

Überschreitet die Leistung dabei für einen hinreichenden Zeitraum, die für die Hilfssysteme notwendige Leistung, werden diese in aller Regel hochgefahren. Dies basiert auf der Annahme, dass der Strom quasi "kostenlos" bzw. ansonsten ungenutzt zur Verfügung steht.

Steht bei eingeschalteten Hilfssystemen darüber hinaus hinreichend Energie zum Betrieb der Elektrolyseeinheit zur Verfügung, wird diese in aller Regel ebenfalls unmittelbar eingeschaltet. Auch hier wird versucht, den regenerativ erzeugten Strom möglichst umgehend für die Elektrolyse zu nutzen.

Varela et al., International Journal of Hydrogen Energy, 2021, 46(14), 9303-9313 offenbart einen Planungsansatz zur Modellierung der alkalischen Wasserelektrolyse für Power-to-X-Anwendungen.

### ZUSAMMENFASSUNG DER ERFINDUNG

Wenngleich es mit der bekannten Verfahrensweise möglich ist, eine hohe Ausbeute an Wasserstoff mit dem regenerativ erzeugten Strom zu erzielen, so hat sich jedoch herausgestellt, dass die Betriebsweise zu einer schnelleren Alterung der Elektrolyseeinheit führt. Dabei ist eine maximale Wasserstoffgewinnung nicht im immer vorteilhaft gegenüber den Kosten für den Betrieb und die Wartung der Elektrolyseanlage.

Aufgabe der vorliegenden Erfindung ist es daher unter Abwägung der Kosten für den Betrieb und die Wartung der Elektrolyseanlage eine optimale Wasserstoffgewinnung zu ermöglichen.

Die gestellte Aufgabe wird durch ein erfindungsgemäßes Verfahren nach der Lehre des Anspruchs 1 gelöst. Vorteilhafte Verfahrensweisen sind Gegenstand der Unteransprüche.

Erforderlich ist zunächst eine Elektrolyseanlage. Diese umfasst als wesentliches Element zumindest eine Elektrolyseeinheit. Um welche Bauart es sich dabei handelt und welche grundsätzliche Betriebsweise diese aufweist, ist zunächst unerheblich. Zumindest ist die Elektrolyseeinheit dafür vorgesehen mit Hilfe einer Stromzufuhr eine Gewinnung von Wasserstoff zu ermöglichen.

Weiterhin sind für den Betrieb Hilfssysteme notwendig, deren Betrieb für den Betrieb der Elektrolyseeinheit Voraussetzung ist. Um welche Art von Hilfssystemen es sich hierbei handelt, ist ebenso zunächst unerheblich. Auch hier kann der Fachmann auf bekannte Elektrolyseanlagen mit den dort eingesetzten Hilfssystemen zurückgreifen. Die Hilfssysteme können beispielsweise Steuerungen, Pumpen, Kühlaggregate und Filtereinrichtungen umfassen. Welche Hilfssysteme im Einzelnen erforderlich sind, hängt unter anderem von der Bauart der Elektrolyseeinheit ab. Für die Anwendung des erfindungsgemäßen Verfahrens sind diese zwingend erforderlich, jedoch ist deren genaue Ausführung unerheblich, sofern ihre Leistungsdaten berücksichtigt werden. Insofern kann der Fachmann auf bekannte Ausführungen von Elektrolyseanlagen mit Elektrolyseeinheiten und Hilfssystemen zurückgreifen. Insofern ist hierzu keine weitere Erläuterung notwendig.

Weiterhin erforderlich ist eine Stromquelle, von der die für den Betrieb der Elektrolyseanlage erforderliche Energie zugeführt wird. Die Stromquelle im Sinne der vorliegenden Erfindung bezieht sich auf den Anschluss an eine Stromerzeugungsanlage, wie beispielsweise einen Solarpark oder eine Windkraftanlage (nicht auf die Stromerzeugungsanlage als solches). Dabei ist für das Verfahren zu berücksichtigen, dass die von der Stromquelle der Elektrolyseanlage zur Verfügung gestellte Lieferleistung einen schwankenden unzuverlässigen Verlauf aufweisen darf. Unabhängig hiervon ist es ebenso möglich das Verfahren einzusetzen, auch wenn die Stromquelle zuverlässig und dauerhaft eine vorteilhaft nutzbare Leistung bereitstellt. Insofern darf (muss aber nicht) die Lieferleistung sowohl in der Höhe als auch in der Dauer schwankend sein oder vollständig auf Null fallen, bzw. im Verfahren ist damit zu rechnen, dass die Lieferleistung nicht konstant ist.

Davon ausgehend (ohne dass dieses eine Voraussetzung für das Verfahren ist), dass die Elektrolyseanlage an Orten eingesetzt wird, welche abseits eines regulären Stromnetzes eingesetzt werden, wird gefordert, dass eine Reservereinheit zur Verfügung steht. Diese Reserveeinheit muss in der Lage sein, bei einem Ausfall einer Stromversorgung durch die Stromquelle ein kontrolliertes Herunterfahren der Elektrolyseanlage zu ermöglichen. Um welche Art es sich dabei handelt, ist zunächst unerheblich. Zumindest muss die Hilfsleistung beim Betrieb der Elektrolyseeinheit unmittelbar zur Abgabe zur Verfügung stehen, um im Falle eines Abfalls oder Ausfalls der Lieferleistung das unmittelbare Herunterfahren zu ermöglichen. Naheliegend muss die Reserveeinheit in der Lage sein, die beim Herunterfahren notwendige Hilfsleistung über den Zeitraum bis zum Abschalten der Elektrolyseanlage zu liefern.

Ausgehend von relevanten Einheiten der Elektrolyseanlage, der Elektrolyseeinheit und den Hilfssystemen ergeben sich verschiedene Zustände.

Unterschieden wird hierbei zwischen einem Ruhezustand, in der sowohl die Elektrolyseeinheit als auch die Wesentlichen Hilfssysteme abgeschaltet sind. Unabhängig hiervor kann vorgesehen sein, dass einzelne Hilfssysteme, welche eine geringe Leistung besitzen, betrieben werden. Zumindest ist in diesem Zustand der Start der Elektrolyse nicht möglich und der Energieverbrauch ist auf Null oder auf ein sehr geringes Maß reduziert.

Der Bereitschaftszustand ist dadurch gekennzeichnet, dass ein quasi jederzeitiger Start der Elektrolyseeinheit möglich ist. Hierzu ist es erforderlich, dass zuvor die notwendigen Hilfssysteme hochgefahren wurden. Durch den Betrieb der Hilfssysteme wird für deren Betrieb Leistung bezogen, ohne dass eine Elektrolyse stattfindet.

Im Betriebszustand wird die Elektrolyseeinheit mit Betriebsstrom versorgt und mittels der Elektrolyse wird Wasserstoff produziert.

Es ist in der Regel nicht möglich eine Elektrolyseanlage unmittelbar zu starten, so dass umgehend eine Wasserstoffproduktion erfolgt. Vielmehr erfordern Einschaltvorgänge eine gewisse Zeitspanne, bevor die Elektrolyseeinheit gestartet und eine Wasserstoffproduktion erfolgen kann. Je nach Zustand der Elektrolyseanlage, wenn diese wieder den Betrieb aufnehmen soll, sind unterschiedliche Maßnahmen erforderlich.

Vor dem Start der Elektrolyse und somit dem Erreichen des Betriebszustands sind verschiedene Hilfssysteme einzuschalten. Dabei ist zu berücksichtigen, dass die verschiedenen Hilfssysteme, welche vor dem Start der eigentlichen Elektrolyse betriebsbereit sein müssen, jeweils eine individuelle Zeitspanne benötigen. Diese Zeitspanne kann durch Auslegung der Hilfssysteme in gewissem Maße beeinflusst werden, ist jedoch stark von der Bauart der Elektrolyseeinheit und dessen Betriebsweise abhängig. Hieraus ergibt sich eine für die Elektrolyseanlage spezifische Hochlaufzeitspanne, welche erforderlich ist, um ausgehend von einer ausgeschalteten Elektrolyseanlage im Ruhezustand in den Bereitschaftszustand zu wechseln, bei der jederzeit die Elektrolyseeinheit gestartet werden kann.

Es ist davon auszugehen, dass die Hochlaufzeitspanne zumindest mehrere Minuten beträgt. Andererseits soll die Hochlaufzeitspanne nicht mehr als 4 Stunden betragen.

Gleichermaßen ist bei einer Beendigung der eigentlichen Elektrolyse weiterhin ein Betrieb von Hilfssystemen erforderlich. Insbesondere ist häufig sicherzustellen, dass die Elektrolyseeinheit kontrolliert abkühlen kann. Insofern ist eine Ausschaltzeitspanne vorhanden, in der nach der Beendigung der Elektrolyse weiterhin Hilfssysteme im Betrieb sein müssen. Auch dieser Zeitraum kann durch die Auslegung der Hilfssysteme beeinflusst werden, ist aber weiterhin stark von der Bauart der Elektrolyseeinheit und dessen Betriebsweise abhängig.

Es ist davon auszugehen, dass die Ausschaltzeitspanne zumindest mehrere Minuten beträgt. Andererseits soll die Ausschaltzeitspanne nicht mehr als 4 Stunden betragen.

Die verschiedenen Hilfssysteme weisen abhängig vom Betriebszustand eine individuelle konstante oder zustandsabhängige Leistung auf. Relevant für die Betrachtung ist die erforderliche Leistung der Hilfssysteme in Summe für den Wechsel aus dem Ruhezustand in den Bereitschaftszustand. Nur wenn diese spezifische Hilfsleistung der Hilfssysteme zur Verfügung gestellt werden kann, kann der Bereitschaftszustand erreicht werden. Analog gilt dieses für die Hilfsleistung der Hilfssysteme in Summe für den Wechsel aus dem Betriebszustand in den Ruhezustand.

Davon unabhängig kann vorgesehen sein, dass abhängig vom Betriebszustand einzelne Hilfssysteme zeitweise abgeschaltet werden oder in deren Leistung reduziert werden während andere Hilfssysteme unvermindert weiter betrieben werden. Sofern ein quasi jederzeitiger Start der Elektrolyse und somit Wechsel in den Betriebszustand möglich ist, wird dieses als Bereitschaftszustand angesehen. Dies wird noch als gegeben angesehen, sofern die Zeitspanne bis zum möglichen Start der Elektrolyseeinheit maximal die 0,1-fache Hochlaufzeitspanne beträgt. Beispielsweise könnte die Leistung von Pumpen reduziert werden, welche demgegenüber sehr schnell wieder auf die vorgesehene Leistung für den Start der Elektrolyse hochgefahren werden.

Nach dem Start der Elektrolyseeinheit dauert es einige Zeit, bis der produzierte Wasserstoff auch effektiv aus der Elektrolyseanlage abgeführt werden kann. Insbesondere erfordert es eine gewisse Zeitspanne, bis eine im Wesentlichen statische Betriebstemperatur erreicht ist und ein vorteilhafter Druck in der Anlage aufgebaut ist. Weiterhin benötigten die Wasserzirkulation und der Prozess des Abscheidens von Sauerstoff und Wasserstoff einige Zeit, bis ein im Wesentlichen statischer Zustand erreicht ist (ausgehend von einer konstanten Stromzufuhr). Weiterhin verursacht dieser Startvorgang einen Energieverbrauch ohne nennenswerte Wasserstoffgewinnung. Die Dauer ist dabei einerseits von der Auslegung der Elektrolyseanlage und anderseits von der Bauart der Elektrolyseeinheit und dessen Betriebsweise abhängig.

Hieraus resultierend definiert sich eine Mindestbetriebsdauer ab der ein im Wesentlichen statischer Zustand (bei angenommener konstanter Leistungszufuhr) erreicht ist.

Weiterhin wird für die Mindestbetriebsdauer gefordert, dass ein Verhältnis zwischen der Menge gewonnenen Wasserstoffs zu der über die Mindestbetriebsdauer eingebrachten Energie zumindest 50% derjenigen Menge beträgt, welche im laufenden Betrieb bei gleichem Energieeinsatz gewonnen wird. D.h. am Ende der Mindestbetriebsdauer wurde zumindest die Menge an Wasserstoff produziert, welcher im laufenden Betrieb mit dem halben Energieeinsatz produziert wird.

Besonders vorteilhaft wird für die Mindestbetriebsdauer gefordert, dass das Verhältnis von gewonnenem Wasserstoff zu Energieeinsatz am Ende der Mindestbetriebsdauer zumindest dem 0,8-fachen des Verhältnisses im laufenden Betrieb entspricht.

Es ist davon auszugehen, dass die Mindestbetriebsdauer zumindest 15 Minuten beträgt. Andererseits soll die Mindestbetriebsdauer nicht mehr als 4 Stunden betragen.

Naheliegend erfordert die Elektrolyse eine Leistungszufuhr. Um einen stabilen Prozess mit einer wirtschaftlichen Wasserstoffgewinnung zu gewährleisten, darf die Leistungszufuhr eine gewisse untere Grenze nicht unterschreiten. Unter Berücksichtigung der dabei für die Hilfssysteme erforderliche Leistung ergibt sich in Summe eine Mindestleistung, die zum Betrieb der Elektrolyseanlage im Betriebszustand zur Verfügung stehen muss.

In Abhängigkeit von der Bauart der Elektrolyseeinheit und dessen Betriebsweise gibt es einen Arbeitsbereich, in der die Elektrolyseeinheit mit einer höheren Leistung mit einer größeren Ausbeute an Wasserstoff betrieben werden kann. Dieser wird begrenzt durch eine Maximalleistung, ab welcher keine Steigerung in der Wasserstoffproduktion erzielt werden kann und/oder eine Schädigung der Elektrolyseanlage auftreten kann.

Das erfindungsgemäße Verfahren erfordert zunächst die Festlegung einer Startbedingung. Dabei wird der Ruhezustand der Elektrolyseanlage angenommen. Zunächst ist es erforderlich, dass zumindest für den Zeitraum der Hochlaufzeitspanne die Lieferleistung über der Hilfsleistung liegt. Da die Lieferleistung bei einer unzuverlässigen Stromquelle nicht eindeutig festgelegt ist, ist es erforderlich eine prognostizierte, mit Wahrscheinlichkeiten behaftete, Lieferleistung heranzuziehen.

Die Wahrscheinlichkeit für die prognostizierte Leistung kann auf unterschiedlicher Weise ermittelt werden. Einerseits kann auf die Wahrscheinlichkeit zurückgegriffen werden, welche für die vorliegende Energiequelle, beispielsweise zu erwartende Windgeschwindigkeit, bereitgestellt wird. Anderseits kann aufgrund von historischen Daten eine Wahrscheinlichkeit zwischen vergangenen Prognosen und den tatsächlichen Werten ermittelt werden. Zumindest ist der Fachmann ohne weiteres in der Lage sinnvolle Werte für die Wahrscheinlichkeit zu ermitteln, anhand derer eine Verfahrensführung möglich ist.

Da die prognostizierte Lieferleistung letztendlich eine Vermutung enthält, jedoch für das Hochfahren der Hilfssysteme eine tatsächliche Leistung bereitgestellt werden muss, ist für die Startbedingung weiterhin zu fordern, dass die prognostizierte Lieferleistung mit hinreichender Wahrscheinlichkeit über der geforderten Hilfsleistung liegt.

Eine hinreichende Wahrscheinlichkeit wird als gegeben angenommen, wenn diese über 80% liegt. Besonders vorteilhaft ist es, wenn gefordert wird, dass für eine hinreichende Wahrscheinlichkeit diese über 90% liegt.

Ist demgegenüber von einer hohen Wahrscheinlichkeit die Rede, so wird angenommen, dass diese über 95% liegt.

Es ist darauf hinzuweisen, dass bei der Frage nach der Wahrscheinlichkeit zu berücksichtigen gilt, dass eine Prüfung auf die Überschreitung von Grenzwerten vorgenommen wird. D.h. es ist nicht die Wahrscheinlichkeit von Interesse, ob die später tatsächlich eintretende Lieferleistung der zuvor prognostizierte Lieferleistung entspricht. Vielmehr ist zu bewerten, ob die später tatsächlich eintretende Lieferleistung den jeweils betrachteten Grenzwert übersteigt.

Im Anschluss an die Hochlaufzeitspanne mit einem Wechsel aus dem Ruhezustand in den Bereitschaftszustand ist es notwendig, dass erwartet werden kann, dass die prognostizierte Lieferleistung weiter über der Hilfsleistung liegt. Dabei ist es zunächst unerheblich, wie lange dieser Zeitraum andauert.

Weiterhin erfordert das Vorliegen der Startbedingung, dass im Anschluss an die Hochlaufzeitspanne bzw. ab einem späteren Zeitpunkt ohne erwarteten zwischenzeitlichen Abfall der prognostizierten Leistung unterhalb der Hilfsleistung die Mindestleistung erreicht wird.

Zum einen ist dabei der Zeitraum zu ermitteln, für den die prognostizierte Lieferleistung oberhalb der Mindestleistung erwartet werden kann.

Zum anderen ist dabei die Wahrscheinlichkeit zu berücksichtigen, dass die prognostizierte Leistung oberhalb der Mindestleistung liegen wird.

Ausgehend von diesen beiden Betrachtungen, der Dauer der erwarteten hinreichenden Lieferleistung und der Wahrscheinlichkeit für die hinreichende Höhe wird für die Startbedingung gefordert, dass derjenige Zeitraum mit einer prognostizierten Lieferleistung oberhalb der Mindestleistung multipliziert mit der Wahrscheinlichkeit zumindest der 1,5-fachen Mindestbetriebsdauer entspricht. D.h. kann mit hoher Wahrscheinlichkeit angenommen werden, dass die prognostizierte Lieferleistung oberhalb der Mindestleistung liegt, so beträgt der geforderte Zeitraum etwas mehr als die 1,5-fache Mindestbetriebsdauer. Beträgt die Wahrscheinlichkeit jedoch lediglich 50%, so muss der Zeitraum mit der prognostizierten Lieferleistung oberhalb der Mindestleistung bereits die 3-fache Mindestbetriebsdauer andauern.

D.h. es wird bei der Startbedingung davon ausgegangen, dass erwartungsgemäß (da die Lieferleistung nur prognostiziert und nicht genau festgelegt ist) nach einem Start der Elektrolyseanlage mit dem Einschalten der Hilfssysteme diese bis zum Start der Elektrolyseeinheit ununterbrochen betrieben werden können und nachfolgend die Elektrolyse über die Mindestbetriebsdauer hinaus ununterbrochen stattfinden kann.

Weiterhin ist die Festlegung einer Betriebsbedingung notwendig. In diesem Fall wird angenommen, dass sich die Elektrolyseanlage im Bereitschaftszustand befindet, d.h. die notwendigen Hilfssysteme im Betrieb sind und demgegenüber die Elektrolyseeinheit abgeschaltet ist. Hier wird gegenüber der Startbedingung zunächst lediglich gefordert, dass die prognostizierte Lieferleistung für die Mindestbetriebsdauer über der Mindestleistung liegt. Dabei wird jedoch eine hinreichende Wahrscheinlichkeit gefordert.

Bei der Prüfung hinsichtlich der Betriebsbedingung wird der unmittelbar nachfolgende Zeitraum dahingehend bewertet, ob die prognostizierte Lieferleistung die Mindestleistung überschreitet. Dabei ist davon auszugehen, dass die Wahrscheinlichkeit höher ist, als die Wahrscheinlichkeit für die prognostizierte Lieferleistung für den gleichen Zeitraum bei der Prüfung der Startbedingungen.

Hier liegt weiterhin die Annahme zu Grunde, dass es, wenn denn die Hilfssysteme ohnehin schon im Betrieb sind, es nützlich ist, wenn erwartungsgemäß für die Mindestbetriebsdauer eine Elektrolyse stattfinden kann, insbesondere wenn die Energie aus regenerativen Quellen stammt und nicht anderweitig sinnvoll genutzt werden kann.

Die Nutzung der Elektrolyseanlage erfolgt mit festgelegter Startbedingung und Betriebsbedingung naheliegend auf Grundlage der prognostizierten Lieferleistung. Befindet sich die Elektrolyseanlage im Ruhezustand, so wird bei Vorliegen der Startbedingung in den Bereitschaftszustand gewechselt und die Hilfssysteme gestartet.

Befindet sich die Elektrolyseanlage im Bereitschaftszustand und die Betriebsbedingungen sind erfüllt, so wird in den Betriebszustand gewechselt und die Elektrolyse gestartet.

Durch das neue Verfahren mit verzögerten Startbedingungen wird zwar eine möglichst umfassende Nutzung von regenerativen Energien ausgelassen, jedoch unterbleibt durch diese Vorgehensweise ein Start der Elektrolyseanlage, wenn nicht absehbar eine hinreichende Zeitspanne für einen durchlaufenden Betrieb der Elektrolyse erwartet werden kann. Insofern wird die nachteilige Beeinflussung der Elektrolyseanlage durch wechselnde Ein- und Ausschaltvorgänge reduziert. Hierdurch kann die Zuverlässigkeit und Lebensdauer der Elektrolyseanlage verbessert werden, wenngleich die Ausbeute an Wasserstoff ein wenig geringer ausfällt. Unter Berücksichtigung der Kosten für die Wartung der Elektrolyseanlage sollte es - jedoch immer abhängig von der tatsächlichen Lieferleistung - somit möglich sein, Wasserstoff zu geringeren Kosten zu produzieren.

Bei der Auslegung der Hilfssysteme und der Annahme, dass zum Starten der Elektrolyseanlage eine längere Zeitspanne mit hinreichender Stromversorgung durch die unzuverlässige Stromquelle erwartet werden kann, ist es nicht erforderlich, eine minimale Hochlaufzeitspanne anzustreben. Vielmehr ist davon auszugehen, dass eine Hochlaufzeitspanne von unter einer halben Stunde einen unnötigen Mehraufwand bzw. Mehrkosten für die Hilfssysteme verursacht.

Demgegenüber sollte jedoch die Hochlaufzeitspanne nicht unnötig lang gewählt werden. Immerhin verzögert diese den möglichen Start der Elektrolyseanlage, wenn sich abzeichnet, dass nachfolgend eine hinreichende Lieferleistung zum Start der Elektrolyse vorhanden ist. Insofern ist es vorteilhaft, wenn die Hochlaufzeitspanne nicht mehr als 2 Stunden beträgt.

Ein unterer Grenzwert für die Mindestbetriebsdauer bestimmt sich einerseits aus dem Anteil gewonnenen Wasserstoffs im Verhältnis zum Energieeinsatz. Andererseits wird erwartet, dass sich ein im Wesentlichen stabiler Prozess mit quasi konstanten Wasserströmen eingestellt hat. Hierbei verbleibt ein gewisser Auslegungsspielraum, wobei zudem die Mindestbetriebsdauer auch größer gewählt werden kann. Entsprechend ist es vorteilhaft, wenn die Mindestbetriebsdauer zumindest eine halbe Stunde beträgt, wenngleich bereits vorher eine effektive Wasserstoffproduktion und stabile Prozesse vorliegen können.

Um eine unnötige Verzögerung des Startens der Elektrolyseeinheit zu vermeiden, sollte darauf geachtet werden, dass die Mindestbetriebsdauer nicht mehr als 2 Stunden beträgt.

In Abhängigkeit von der möglichen Anbindung der Elektrolyseanlage an beispielsweise ein öffentliches Netz oder im Gegensatz dazu deren Fehlen sowie in Abhängigkeit von der geforderten Sicherheit kann für die Startbedingung festgelegt werden, dass die prognostizierte Lieferleistung für zumindest die Hochlaufzeitspanne mit hoher Wahrscheinlichkeit über der Hilfsleistung liegt.

Weiterhin ist es naheliegend, dass der Bereitschaftszustand eine fortgesetzte Versorgung erfordert. Wenngleich - wie zuvor angemerkt - die erforderliche Hilfsleistung keine über alle Zeiten feste Höhe besitzt, so ist dennoch die notwendige (evtl. zeitlich leicht schwankende) Hilfsleistung für den Bereitschaftszustand bereitzustellen.

Daher ist es weiterhin vorteilhaft, wenn für die Startbedingung gefordert wird, dass die notwendige Hilfsleistung auch für den weiteren Betrieb über den Bereitschaftszustand gewährleistet ist. Hierbei kann in einfacher Weise gefordert werden, dass die prognostizierte Lieferleistung für zumindest die Hochlaufzeitspanne mit hinreichender oder hoher Wahrscheinlichkeit über der Hilfsleistung liegt. Sofern eine alternative bzw. ergänzende Energieversorgung möglich ist, so wird diese vorteilhaft als Ersatzleistung mit berücksichtigt.

Wenngleich sich in der Prognose ergibt, dass die prognostizierte Lieferleistung für den Wechsel aus dem Ruhezustand in den Bereitschaftszustand hinreichend ist und in einem späteren Zeitpunkt, ohne dass die prognostizierte Lieferleistung unter die geforderte Hilfsleistung fällt, die Mindestleistung für eine längere Zeitspanne erwartet werden kann, so ist ein unnötig langer Betrieb der Hilfssysteme auch nicht optimal.

Daher ist es vorteilhaft, wenn die Startbedingung dahingehend konkretisiert wird, dass zwischen dem Erreichen des Bereitschaftszustands mit eingeschalteten Hilfssystemen und dem erwarteten Starten der Elektrolyse ein Zeitraum von höchstens der 3-fachen Hochlaufzeitspanne liegt. Insofern darf vor dem Start der Elektrolyseanlage prognostiziert das Erreichen der Mindestleistung vorteilhaft nicht weiter als die 4-fache Hochlaufzeitspanne zeitlich entfernt sein. Alternativ kann für die Startbedingung festgelegt werden, dass die prognostizierte Lieferleistung die Mindestleistung nicht später als nach der 3-fachen Hochlaufzeitspanne erreicht. Dabei ist - wie zuvor ausgeführt - zu fordern, dass bei der Startbedingung angenommen werden kann, dass die Elektrolyse für die geforderte Dauer durchgeführt werden kann.

Grundgedanke der Erfindung ist es, die Elektrolyseanlage vor einer unnötigen Alterung und somit einer frühzeitigen Wartung zu schützen, auch wenn hiermit möglicherweise zur Verfügung stehende, regenerative Energie ungenutzt bleibt. Insbesondere bei schwierigen örtlichen Verhältnissen zur Durchführung der Wartung und Versorgung mit entsprechendem Material und Ersatzteilen ist es vorteilhaft, wenn eine möglichst lange Lebensdauer bzw. ein möglichst langer Serviceintervall erzielt werden kann.

Hier ist es entsprechend vorteilhaft, wenn die Startbedingung dahingehend verschärft wird, dass nach einer Hochlaufzeitspanne und fortgesetzter Stromversorgung in Höhe der Hilfsleistung bis zum Wechsel in den Betriebszustand vorausgesetzt wird, dass die prognostizierte Lieferleistung, bzw. deren Erwartungswert, über einen längeren Zeitraum als die Mindestbetriebsdauer einen durchgehenden Betrieb der Elektrolyseeinheit ermöglicht und entsprechend erwartungsgemäß die Mindestleistung für den Zeitraum zumindest erreicht. Dabei kann wiederum die Wahrscheinlichkeit für die prognostizierte Lieferleistung berücksichtigt werden.

Zunächst ist es vorteilhaft, für die Betriebsbedingung hinsichtlich des erforderlichen Zeitraums, bei der die prognostizierten Lieferleistung über der Mindestleistung liegt, die gleiche Forderung wie bei der Startbedingung aufzustellen.

Darüber hinaus wird für die Betriebsbedingung vorteilhaft gefordert, dass derjenige Zeitraum, über den die prognostizierte Lieferleistung oberhalb der Mindestleistung liegt, mit der Wahrscheinlichkeit multipliziert wird und als Produkt zumindest der 2-fachen Mindestbetriebsdauer entspricht. D.h. kann mit hoher Wahrscheinlichkeit angenommen werden, dass die prognostizierte Lieferleistung oberhalb der Mindestleistung liegt, so beträgt der geforderte Zeitraum etwas mehr als die 2-fache Mindestbetriebsdauer. Beträgt die Wahrscheinlichkeit jedoch lediglich 50%, so muss der Zeitraum mit der prognostizierten Lieferleistung oberhalb der Mindestleistung bereits die 4-fache Mindestbetriebsdauer andauern.

Besonders vorteilhaft ist es darüber hinaus, wenn gefordert wird, dass prognostiziert der Betriebszustand zumindest über die Zeitspanne, gewichtet mit der Wahrscheinlichkeit, der 3-fachen Mindestbetriebsdauer eingehalten werden kann.

Analog zu den Startbedingungen verhält es sich für die Festlegung der Betriebsbedingungen, wobei in vorteilhafter Weise auch hier der Start der Elektrolyse zugunsten einer höheren Lebensdauer verzögert wird.

Die Reserveeinheit ist erforderlich, um im Falle einer unerwarteten Reduktion der Lieferleistung oder dessen Ausbleiben ein kontrolliertes Herunterfahren der Elektrolyseanlage zu ermöglichen.

Eine Reserveeinheit könntezunächst als ein Stromanschluss an ein reguläres Stromnetz reaslisiert werden. Diese Ausführung kann an denjenigen Orten vorteilhaft sein, an denen zwar eine für die Hilfssysteme notwendige Hilfsleistung für das Herunterfahren der Anlage zur Verfügung gestellt werden kann, aber der Stromanschluss nicht in der Lage ist überhaupt oder nennenswert von der Stromquelle erzeugte Energie abzuführen oder der Elektrolyseanlage Energie in Höhe der Mindestleistung zur Verfügung zu stellen.

Der Einsatz des erfindungsgemäßen Verfahrens bietet sich an, sofern kein zuverlässiger Stromanschluss vorhanden ist. Unter diesen Voraussetzungen kann vielfach nicht davon ausgegangen werden, dass ein für eine Reserveeinheit hinreichender Stromanschluss gewährleistet werden kann. Daher wird erfindungsgemäß die Verwendung eines Batteriespeichers vorgesehen. Somit kann die Elektrolyseanlage autark unter Nutzung von regenerativer Energie betrieben werden und ein sicheres Herunterfahren beim Ausbleiben der Energie gewährleistet werden.

Da es sich bei der Reserveeinheit um einen aufladbaren Energiespeicher handelt, d. h. einem Batteriespeicher, wird weiterhin vorteilhaft für die Startbedingungen gefordert, dass nach einem angenommenen Betrieb der Elektrolyseanlage über die Mindestbetriebsdauer im Betriebszustand (prognostiziert) zusätzlich hinreichend Energie von der Stromquelle zur Verfügung steht, um den Energiespeicher bzw. den Batteriespeicher hinreichend aufladen zu können. Der hinreichende Ladezustand des Energiespeichers ermöglicht somit das sichere Herunterfahren beim Ausbleiben der Energie an de Energiequelle. Naheliegend ist dieses vom jeweiligen Ladezustand des Energiespeichers bzw. Batteriespeichers bei Prüfung der Startbedingungen abhängig.

Bei der Ausführung der Reserveeinheit mit einem aufladbaren Energiespeicher wird hinsichtlich der Betriebsbedingung vorteilhaft der Ladezustand und die Wahrscheinlichkeit für das Eintreffen der prognostizierten Lieferleistung berücksichtigt. Kann von einer hohen Wahrscheinlichkeit für die prognostizierte Lieferleistung ausgegangen werden, so kann es hinreichend sein, wenn die Reserveeinheit zum Ende der Mindestbetriebsdauer hinreichend geladen ist.

Sofern nur eine hinreichende Wahrscheinlichkeit für prognostizierte Lieferleistung gegeben ist (wie dies für die Startbedingung gefordert wird), so wird vorteilhaft gefordert, dass bereits bei der halben Mindestbetriebsdauer ein hinreichender Ladezustand der Reserveeinheit erreicht werden kann.

Das Laden des Energiespeichers bzw. Batteriespeichers kann im laufenden Betrieb in Abhängigkeit von der prognostizierten Lieferleistung erfolgen. Sofern diese lediglich geringfügig über der Mindestleistung liegt, kann es notwendig sein, dass vor dem Starten der Elektrolyseeinheit zunächst der Energiespeicher bzw. Batteriespeicher geladen wird (da evtl. die prognostizierte Lieferleistung nicht hinreichend ist, um die Mindestleistung an die Elektrolyseeinheit abzugeben und zugleich die Reserveeinheit zu laden. Liegt die prognostizierte Leistung hinreichend über der Mindestleistung kann ebenso vorgesehen sein, dass die Elektrolyseeinheit gestartet wird und in den Betriebszustand wechselt und zugleich ein Aufladen des Energiespeichers bzw. Batteriespeichers erfolgt.

Die Reserveeinheit ist als Absicherung für einen plötzlichen Ausfall der Lieferleistung notwendig. Demgegenüber kann es weiterhin vorteilhaft sein eine Speichervorrichtung vorzusehen, welche die von der Stromquelle zur Verfügung gestellte Energie speichern kann.

Dieses ermöglicht es insbesondere, die von den Hilfssystemen oder in der Elektrolyseeinheit nicht verwendbare Energie sinnvoll für einer spätere Nutzung speichern zu können. Mit den verlängerten Zeiträumen durch die Definition der Startbedingungen und der Betriebsbedingungen geht nahezu zwangsläufig einher, dass von der Stromquelle zur Verfügung gestellte Energie vor dem Vorliegen der Startbedingungen bzw. vor dem Vorliegen der Betriebsbedingungen gespeichert werden kann.

Da grundsätzlich eine Reserveeinheit erforderlich ist und wenn weiterhin vorteilhaft eine Speichervorrichtung gefordert wird, so können diese prinzipiell als getrennte Einheiten vorgesehen werden. Dabei wird naheliegend die Reserveeinheit abweichend zu der Speichervorrichtung betrieben (Speicherung in der Reserveeinheit als Voraussetzung für den Betrieb; Speicherung in der Speichervorrichtung nur bei Energieüberschuss).

In vorteilhafter Weise wird die Reserveeinheit in der Speichervorrichtung integriert. Insofern erfolgt ein Laden der Speichervorrichtung mit integrierter Reserveeinheit zunächst mit höherer Priorität, um das sichere Herunterfahren der Elektrolyseeinheit gewährleisten zu können. Ein darüber hinausgehendes Laden der Speichervorrichtung erfolgt nur im Falle eines Energieüberschusses bzw. einer Lieferleistung der Stromquelle, welche nicht in der Elektrolyseeinheit und auch nicht von den Hilfssystemen verbraucht wird.

Weiterhin ergeben sich durch das Vorhandensein einer Speichervorrichtung weitere Betriebsmöglichkeiten, sodass die Nutzung der Elektrolyseeinheit insbesondere bei einer aufgeladenen Speichervorrichtung und einem kurzfristigen Unterschreiten der Mindestleistung unvermindert weiter betrieben werden kann.

Davon ausgehend, dass es von besonders großem Nutzen ist, wenn ein kurzfristiges Unterschreiten der Mindestleistung durch die tatsächliche Lieferleistung abgefangen werden kann, ist es besonders vorteilhaft, wenn die aufgeladene Speichervorrichtung zumindest die halbe Mindestleistung für zumindest die halbe Mindestbetriebsdauer liefern kann. Dieses ermöglicht einen weiteren unterbrechungsfreien Betrieb der Elektrolyseeinheit, auch wenn kurzzeitige Schwankungen unterhalb der Mindestleistung auftreten.

Darüber hinaus ist es vorteilhaft, wenn die aufgeladene Speichervorrichtung die Mindestleistung bereitstellen kann. Somit kann auch bei einem kurzzeitigen vollständigen Einbruch der Lieferleistung der Betriebszustand aufrecht gehalten werden. D.h. bei der Auslegung der Speichervorrichtung ist daher vorteilhaft zu berücksichtigen, dass die Speichervorrichtung Energie speichern kann, welche zum Betrieb der Hilfssysteme und der Elektrolyseeinheit erforderlich ist.

Um einen möglichst langen Betrieb der Elektrolyseeinheit zu ermöglichen, wird weiterhin vorgesehen, dass die geladene Speichervorrichtung zumindest über die halbe Mindestleistung für zumindest die Mindestbetriebsdauer bereitstellen kann. Somit kann auch bei einem längeren Abfall der tatsächlichen Lieferleistung unterhalb der Mindestleistung die Elektrolyse fortgesetzt werden.

Da es sich bei der Stromquelle erwartungsgemäß um eine unzuverlässige Stromversorgung handelt ist vorteilhaft festzulegen, welche Maßnahmen zu ergreifen sind, wenn die prognostizierte Lieferleistung geringer ist als es für den unveränderten weiteren Betrieb der Elektrolyseanlage erforderlich ist.

Sofern der Bereitschaftszustand erreicht bzw. gegeben ist, so stellt sich die Frage, wie lange die prognostizierte Lieferleistung unterhalb der notwendigen Hilfsleistung liegen wird. Dieser Zeitraum wird als zulässiger Ausfallzeitraum definiert. Hiervon ausgehend wird vorteilhaft eine Ausfallbedingung definiert, bei dessen Vorliegen vom Bereitschaftszustand in den Ruhezustand gewechselt wird.

Als eine erste Bedingung wird vorteilhaft festgelegt, dass ein mit der Wahrscheinlichkeit gewichteter Ausfallzeitraum länger als eine X-fache Hochlaufzeitspanne ist. Dies geht von der Annahme aus, dass man bei einer längeren Zeitspanne zunächst in den Ruhezustand wechseln kann und nachfolgend wieder in den Bereitschaftszustand und dabei in der Zwischenzeit die Hilfsleistung einsparen kann. Somit ist die Ausfallbedingung (als Trigger für das Abschalten) gegeben, wenn die Zeitspanne bis zur erneuten Erhöhung der prognostizierten Lieferleistung multipliziert mit der Wahrscheinlichkeit länger als die X-fache Hochlaufzeitspanne ist.

Bei der Frage, was ein besonders vorteilhafter Faktor ist, ist ein Abwägung zwischen einem unnötigen Weiterbetrieb der Hilfssysteme, ohne dass zeitnah eine Elektrolyse stattfinden kann, und einem Zeitverlust für das Herunter- und wieder Hochfahren der Hilfssysteme notwendig. Als vorteilhaft haben sich Grenzwerte für den Ausfallzeitraum multipliziert mit der Wahrscheinlichkeit zwischen der 2-fachen und der 10-fachen, beispielsweise der 3-fachen oder 5-fachen, Hochlaufzeitspanne erwiesen.

Besonders vorteilhaft ist es dabei als erste Bedingung zu berücksichtigen, dass der gewichtete Ausfallzeitraum länger als die 4-fache Hochlaufzeitspanne ist. Hierdurch wird bei einer Besserung der Prognose für einen erneuten Betrieb der Elektrolyseeinheit, d.h. einem erneuten Vorliegen der Betriebsbedingung, ein schnellerer Start ermöglicht. Überschreitet hingegen der Mangel einen längeren Zeitraum, so ist es sinnvoll in den Ruhezustand zu wechseln (d.h. Ausfallbedingung gegeben).

Weiterhin ist es nur sinnvoll einen Ausfallzeitraum zu überbrücken, wenn erwartet werden kann, dass nach dem Ausfallzeitraum eine erneute Inbetriebnahme der Elektrolyse und somit eine Wasserstoffproduktion möglich ist. Hieraus ergibt sich vorteilhaft die zweite Bedingung für die Ausfallbedingung. Demnach ist die Ausfallbedingung gegeben, wenn nach dem Ausfallzeitraum die Betriebsbedingung prognostiziert, nicht erfüllt wird.

Ein weiterer Betrieb der Hilfssysteme ist bei mangelhafter Lieferleistung nur möglich, wenn die fehlende Energie anderweitig zugeführt wird. Dieses erfolgt in vorteilhafter Weise durch die Speichervorrichtung. Naheliegend ist dieses jedoch nur möglich, wenn diese für diesen Zweck hinreichend geladen ist. Hieraus ergibt sich die dritte Bedingung für die Ausfallbedingung. Demnach ist die Ausfallbedingung gegeben, wenn in der Speichervorrichtung nicht hinreichend Energie zum weiteren Betrieb der Hilfssysteme über den Ausfallzeitraum gespeichert ist.

Mit Vorhandensein der Speichervorrichtung und der Festlegung einer Ausfallbedingung ergibt sich vorteilhaft die Verfahrensweise, dass die Hilfssysteme beim Vorliegen der Ausfallbedingung heruntergefahren werden und insofern vom Bereitschaftszustand in den Ruhezustand gewechselt wird. Ansonsten wird die an der Stromquelle fehlende Hilfsleistung durch die Speichervorrichtung bereitgestellt.

Weiterhin gilt es vorteilhaft zu berücksichtigen, welche Vorgehensweise im Betriebszustand, d.h. die Elektrolyse stattfindet, notwendig ist, wenn die tatsächliche Lieferleistung unterhalb die Mindestleistung fällt. Sofern keine anderweitige Zufuhr der fehlenden Leistung möglich ist, führt dies unmittelbar zur Notwendigkeit in den Bereitschaftszustand zu wechseln.

Sofern eine Speichervorrichtung in hinreichender Größe vorhanden ist, so ermöglicht dies nicht nur einen vorrübergehenden Betrieb der Hilfssysteme, sondern kann auch vorrübergehend die für den Betrieb der Elektrolyseeinheit notwendige Mindestleistung anteilig oder vollständig zuführen.

Hieraus resultierend ist es weiterhin vorteilhaft, wenn eine Stoppbedingung festgelegt wird, bei dessen Vorliegen aus dem Betriebszustand in den Bereitschaftszustand gewechselt wird. Dabei ist analog die prognostizierte Lieferleistung und dessen Wahrscheinlichkeit zu berücksichtigen. Hierzu wird ein Mangelzeitraum ermittelt, wobei bei einem Unterschreiten der Mindestleistung über den Mangelzeitraum hinaus die Stoppbedingung erfüllt ist.

Zunächst einmal ist die Stoppbedingung als gegeben anzunehmen, wenn nach dem Mangelzeitraum die Betriebsbedingungen nicht erfüllt sind. D.h. die Stoppbedingung ist gegeben, wenn es nach Ablauf des Mangelzeitraums nicht möglich ist, die Elektrolyseeinheit mit hinreichender Wahrscheinlichkeit für die Mindestbetriebsdauer durch die Lieferung aus der Stromquelle zu betreiben.

Betreffend die zu überbrückende Zeitspanne wird der Mangelzeitraum vorteilhaft in Abhängigkeit von der Kapazität und vom Ladezustand der Speichervorrichtung definiert. Hiervon ausgehend gilt es den Mangelzeitraum zu begrenzen auf diejenige Zeitspanne, in der die Speichervorrichtung in der Lage ist, anteilig die an der Stromquelle fehlende Mindestleistung oder die ausbleibende Mindestleistung zu liefern.

Dabei sollte jedoch vermieden werden, dass die Speichervorrichtung geplant vollständig entleert wird. Insofern ist es vorteilhaft, wenn der Mangelzeitraum begrenzt wird, sobald der Ladezustand der Speichervorrichtung unterhalb eines Grenzwertes fällt.

Als Basis für den Grenzwert kommen vorteilhaft zwei verschiedene Parameter in Betracht. In einer ersten Variante wird vorteilhaft ein erster Grenzwert in Relation zur Speicherkapazität der Speichervorrichtung gesetzt.

In einer zweiten Variante kann es vorteilhaft sein, wenn ein zweiter Grenzwert in Relation zum jeweiligen Ladezustand der Speichervorrichtung zu Beginn des Mangelzeitraums verwendet wird.

Diese Grenzwerte liegen sowohl in erster Variante als auch in zweiter Variante bevorzugt zwischen 5% und 25%. Wird im Falle ausbleibender oder mangelnder Lieferleistung der Stromquelle die fehlende Mindestleistung über den Mangelzeitraum von der Speichervorrichtung zugeführt, so sollte am Ende des Mangelzeitraums der Ladezustand der Speichervorrichtung absolut - erste Variante - oder relativ - zweite Variante - nicht unterhalb des zugehörigen Grenzwertes liegen.

Beträgt der Ladezustand der Speichervorrichtung vor dem Mangelzeitraum beispielsweise 50%, so sollte am Ende des Mangelzeitraums der Ladezustand der Speichervorrichtung nicht weniger als zwischen 5% bis 25% - erste Variante - respektive nicht weniger als zwischen 2,5% bis 12,5% - zweite Variante - betragen.

Hieraus ergibt sich naheliegend die Verfahrensweise, demgemäß bei Vorliegen der Mangelbedingung die Elektrolyseeinheit abgeschaltet wird und vom Betriebszustand in den Bereitschaftszustand gewechselt wird, während ansonsten die fehlende Mindestleistung von der Speichervorrichtung zugeführt wird.

Die vorherigen Ausführungen zum erfindungsgemäßen sowie zum vorteilhaften Verfahren mit der erforderlichen Elektrolyseanlage sind grundsätzlich unabhängig von der Anzahl der Elektrolyseeinheiten. Jedoch beziehen sich die Angaben zu der Startbedingung, der Betriebsbedingung und vorteilhaft der Stoppbedingung und vorteilhaft der Ausfallbedingung auf eine erste Elektrolyseeinheit.

Vorteilhaft weist die Elektrolyseanlage zwei oder mehr Elektrolyseeinheiten auf. Hierbei ist es notwendig für jede der einzelnen Elektrolyseeinheiten die Bedingungen festzulegen. Dabei können die Bedingungen identisch oder unterschiedlich sein, unter anderem in Abhängigkeit, ob die Elektrolyseanlagen identisch oder unterschiedlich ausgeführt sind. Dazu sind auch die zugehörigen Zeiträume für jede der Elektrolyseeinheit zu bestimmen.

Zumindest ist bei Vorhandensein von zumindest zwei Elektrolyseeinheiten eine Verfahrensweise vorteilhaft, bei der die Elektrolyseeinheiten sukzessive ein- bzw. ausgeschaltet werden. Somit kann bei einem Schwanken der prognostizierten Lieferleistung vorteilhafter die verfügbare Energie zur Wasserstoffproduktion genutzt werden.

### BESCHREIBUNG DER AUSFÜHRUNGSFORMEN

In der nachfolgenden Figur wird beispielhaft ein Diagramm für einen möglichen Verlauf für die Lieferleistung dargestellt. Beispielsweise kann es sich eine von einer Windkraftanlage erzeugte Lieferleistung handeln, welche entsprechend an der Stromquelle für die Elektrolyseanlage bereitgestellt wird.

Hier die die Lieferleistung (P) 01 - Ordinate 03 - über die Zeit (t) - Abszisse 02 - aufgetragen. Eine untere Grenzlinie skizziert die erforderliche Hilfsleistung 05 der Hilfssysteme. Darüber befindet sich eine weiter Grenzlinie als Mindestleistung 06 der Elektrolyseeinheit zusammen mit den Hilfssystemen.

Angenommen wird, dass es sich um eine prognostizierte Lieferleistung handelt und das exemplarisch eine Wahrscheinlichkeit von 80% gegeben ist.

In der Praxis wird naheliegend die Wahrscheinlichkeit häufig von dem Zeithorizont abhängen, d.h. die Wahrscheinlichkeit für die Richtigkeit der prognostizierten Lieferleistung nimmt mit zunehmenden Zeitabstand üblicherweise immer weiter ab.

Ausgangspunkt ist die Elektrolyseanlage im Ruhezustand. Mit der Ermittlung der prognostizierten Lieferleistung erfolgt zunächst die Prüfung der Starbedingung.

Ausgehend von dem beispielhaft dargestellten Verlauf der prognostizierten Lieferleistung 01 gibt es einen Zeitraum, über den hinweg die prognostizierten Lieferleistung 01 mit hinreichender Wahrscheinlichkeit höher als die Hilfsleistung 05 und länger als die Hochlaufzeitspanne 07 ist.

Würde hingegen gefordert, dass die prognostizierte Lieferleistung 01 mit hoher Wahrscheinlichkeit höher als die Hilfsleistung 05 ist und hier eine Wahrscheinlichkeit von 80% gegeben, so wäre diese Bedingung nicht erfüllt. Es kann jedoch erwartet werden, dass die Wahrscheinlichkeit für das Überschreiten eines Grenzwertes deutlich höher liegt als die Wahrscheinlichkeit für den prognostizierten Verlauf der Lieferleistung.

In einem darauffolgenden Zeitabschnitt gibt es einen Verlauf, über den die prognostizierte Lieferleistung 01 über der Mindestleistung 06 liegt. Dabei ist der Faktor aus der Zeitspanne mit der beispielhaften prognostizierte Lieferleistung 01 über der Mindestleistung 06 multipliziert mit der exemplarischen Wahrscheinlichkeit von 80% größer als die 1,5-fache Mindestbetriebsdauer 08.

Hieraus resultierend sind die Startbedingungen erfüllt (zu Beginn des dargestellten Zeitabschnitts 07) und die Hilfssysteme wären hochzufahren, d.h. es erfolgt der Wechsel vom Ruhezustand in den Bereitschaftszustand.

Bei laufenden Hilfssystemen im Bereitschaftszustand wird laufend geprüft, ob die Betriebsbedingung erfüllt ist. Dies ist offensichtlich gegeben, da diese schon bei der Prüfung der Startbedingungen für diesen exemplarischen Verlauf vorlagen.

Mit dem Eintreffen der Betriebsbedingungen (am Anfang der Zeitspanne 08) erfolgt der Wechsel aus dem Bereitschaftszustand in den Betriebszustand. D.h. die Elektrolyseeinheit mit der Elektrolyse wird gestartet.

Es ist davon auszugehen, dass sich der Verlauf der prognostizierten Lieferleistung über die Zeit je nach Wahrscheinlichkeit verändert und hierbei die Wahrscheinlichkeit mit kürzerem Abstand in die Zukunft zunimmt. Beim Vorliegen der Startbedingungen wird angenommen, dass zu einem späteren Zeitpunkt auch die Betriebsbedingungen eintreffen. Demgegenüber kann es ohne weiteres vorkommen, dass sich der Verlauf der prognostizierten Lieferleistung nachteilig ändert und die Betriebsbedingungen nicht wie erwartet erreicht werden.

Im exemplarisch dargestellten Verlauf sind beispielhaft einige relevante Zeitpunkte zur weiteren Erläuterung dargestellt. Dabei ist es von Relevanz, ob eine Speichervorrichtung vorhanden ist oder nicht und wie der Ladezustand der Reserveeinheit und der angenommenen Speichervorrichtung ist.

Zunächst gib es im Bereitschaftszustand (nachfolgend der Hochlaufzeitspanne 07) einen kurzfristigen Abfall unterhalb der Hilfsleistung - Zeitabschnitt 11. Ohne Speichervorrichtung und wenn man die Reserveeinheit nicht ersatzweise zur Überbrückung einsetzen kann oder will, wäre ein umgehender Ausfall der Hilfssysteme (zumindest anteilig) die Folge (da ja die notwendige Leistung fehlt).

Vorteilhaft ist jedoch eine Speichervorrichtung vorhanden, so dass zunächst geprüft wird, ob die Ausfallbedingungen vorliegen. In der Annahme, dass die Speichervorrichtung zumindest anteilig geladen ist, sollte diese ohne weiteres in der Lage sein, die fehlende Hilfsleistung zuzuführen. Auch ist die Zeitspanne bis zu dem zu erwartenden Erreichen der Betriebsbedingungen kurz, so dass die Hilfssysteme nicht abgeschaltet werden müssen, d.h. der Bereitschaftszustand wird beibehalten.

Im weiteren Verlauf steigt die Lieferleistung 01 oberhalb der Mindestleistung - Zeitabschnitt 12. Bei der Prüfung der Startbedingung ist jedoch festzustellen, dass die prognostizierte Lieferleistung nicht für die Mindestbetriebsdauer oberhalb der Mindestleistung 06 liegt - siehe Zeitabschnitt 13. Somit bleibt es beim Bereitschaftszustand. Die über der Hilfsleistung überschüssige Energie wird dabei vorteilhaft der Speichervorrichtung zugeführt.

Nach dem Start der Elektrolyse, d.h. der Mindestbetriebsdauer 08 gibt es einen kurzzeitigen Abfall unterhalb der Mindestleistung - Zeitabschnitt 14. Gleichfalls, wie beim Zeitabschnitt 11, kann dieser Mangel an Energie vorteilhaft von der Speichervorrichtung bereitgestellt werden.

Im weiteren Verlauf fällt die Lieferleistung 01 erneut unter die Mindestleistung 06 - Zeitabschnitt 15. Jetzt ist vorteilhaft zu prüfen, ob die Stoppbedingungen zum Abschalten der Elektrolyse eingetreten sind. Der Mangelzeitraum erstreckt sich vom Abfall unter die Mindestleistung 06 bis zum erneuten Überschreiten der Mindestleistung 06. Es sei angenommen, dass nachfolgend die Betriebsbedingung wieder erfüllt ist. Nun ist die entscheidende Frage, ob die Speichervorrichtung in der Lage ist, die bei der Lieferleistung fehlende Energie über den Mangelzeitraum bis zur Mindestleistung zuzuführen. Ist dieses der Fall, so bleibt der Betriebszustand bestehen und die Elektrolyse kann fortgesetzt werden. Ist die Speichervorrichtung hingegen beispielsweise entladen, so ist es zwangsläufig notwendig, die Elektrolyseeinheit abzuschalten und in den Bereitschaftszustand zu wechseln.

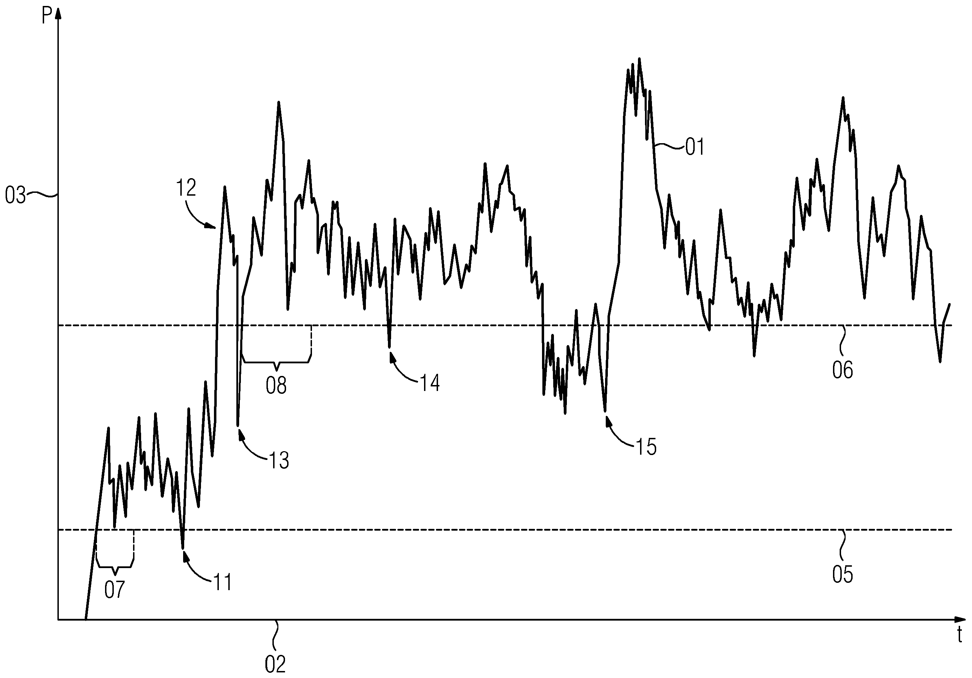

## Patentansprüche

1. Verfahren zur Steuerung einer Elektrolyseanlage mit einem Ruhezustand und einem Bereitschaftszustand und einem Betriebszustand umfassend
- Hilfssysteme, welche in Summe eine spezifische Hilfsleistung aufweisen und im Bereitschaftszustand sowie im Betriebszustand eingeschaltet sind und eine spezifische Hochlaufzeitspanne für den Wechsel aus dem Ruhezustand in den Bereitschaftszustand und eine spezifische Ausschaltzeitspanne für den Wechsel aus dem Bereitschaftszustand in den Ruhezustand besitzen und auf eine Hochlaufzeitspanne von maximal 4 Stunden und eine Ausschaltzeitspanne von maximal 4 Stunden ausgelegt sind; und
- zumindest eine Elektrolyseeinheit, welche eine spezifische Mindestleistung inklusive der Hilfsleistung aufweist und im Betriebszustand Wasserstoff und Sauerstoff erzeugt und eine definierte Mindestbetriebsdauer zwischen 0,25 Stunden und 4 Stunden aufweist; und
- zumindest eine Stromquelle, welche Strom zu wechselnden Zeiten und wechselnden Zeiträumen mit wechselnder Lieferleistung liefert; und
- zumindest eine Speichervorrichtung; und
- zumindest eine in der Speichervorrichtung integrierte Reserveeinheit umfassend einen Batteriespeicher;
wobei eine hinreichende Ladung des Batteriespeichers gegeben ist, wenn Energie zur Abgabe zumindest der Hilfsleistung über zumindest die Ausschaltzeitspanne zur Verfügung gestellt werden kann;
wobei bei einer hinreichenden Wahrscheinlichkeit die ermittelte Wahrscheinlichkeit bei über 80% und bei einer hohen Wahrscheinlichkeit bei über 95% liegt;
a) wobei ausgehend vom Ruhezustand eine Startbedingung festgelegt wird, bei der
- eine prognostizierte Lieferleistung für zumindest die Hochlaufzeitspanne mit hinreichender Wahrscheinlichkeit über der Hilfsleistung liegt, und
- anschließend derjenige Zeitraum mit einer prognostizierten Lieferleistung oberhalb der Mindestleistung multipliziert mit dessen Wahrscheinlichkeit zumindest der 1,5-fachen Mindestbetriebsdauer entspricht, und
- mit hinreichender Wahrscheinlichkeit zusätzlich der Batteriespeicher bis zum Ende der Mindestbetriebsdauer hinreichend geladen werden kann;
b) wobei ausgehend vom Bereitschaftszustand eine Betriebsbedingung festgelegt wird, bei der
- die prognostizierte Lieferleistung mit hinreichender Wahrscheinlichkeit für die Mindestbetriebsdauer über der Mindestleistung liegt, und
- der Batteriespeicher bei hinreichender Wahrscheinlichkeit spätestens bis zum Ende der halben Mindestbetriebsdauer oder bei hoher Wahrscheinlichkeit spätestens bis zum Ende der Mindestbetriebsdauer hinreichend geladen werden kann;
c) wobei fortlaufend ausgehend von der aktuell zur Verfügung stehenden Lieferleistung eine Prognose über den zu erwartenden Verlauf einer prognostizierten Lieferleistung erstellt;
d) wobei im Ruhezustand bei Vorliegen der Startbedingung in den Bereitschaftszustand gewechselt wird und
e) wobei im Bereitschaftszustand bei Vorliegen der Betriebsbedingung in den Betriebszustand gewechselt wird; und
f) wobei von der Stromquelle gelieferte und nicht vom Hilfssystem oder der Elektrolyseeinheit verbrauchte Energie dem Batteriespeicher zugeführt wird.

2. Verfahren nach Anspruch 1,
wobei die Hochlaufzeitspanne zumindest 0,5 Stunden und höchstens 2 Stunden beträgt; und/oder
wobei die Mindestbetriebsdauer zwischen 0,5 Stunden und 2 Stunden liegt.

3. Verfahren nach Anspruch 1 oder 2,
a') wobei eine Startbedingung festgelegt wird, bei der
- die prognostizierte Lieferleistung für zumindest die Hochlaufzeitspanne mit hoher Wahrscheinlichkeit über der Hilfsleistung liegt; und/oder
- die prognostizierte Lieferleistung gegebenenfalls ergänzt durch eine Ersatzleistung bis über das Erreichen der Mindestleistung hinaus mit hoher Wahrscheinlichkeit über der Hilfsleistung liegt; und/oder
- das Erreichen der Mindestleistung mit geforderter Dauer durch die prognostizierte Lieferleistung maximal nach der 4-fachen Hochlaufzeitspanne erreicht wird; und/oder
- anschließend derjenige Zeitraum mit einer prognostizierten Lieferleistung oberhalb der Mindestleistung multipliziert mit dessen Wahrscheinlichkeit zumindest der 2,5-fachen Mindestbetriebsdauer entspricht.

4. Verfahren nach einem der Ansprüche 1 bis 3,
b') wobei eine Betriebsbedingung festgelegt wird, bei der
- die prognostizierte Lieferleistung mit hoher Wahrscheinlichkeit für die Mindestbetriebsdauer über der Mindestleistung liegt und
- der Zeitraum mit einer prognostizierten Lieferleistung oberhalb der Mindestleistung mit dessen Wahrscheinlichkeit multipliziert zumindest der 2-fachen Mindestbetriebsdauer entspricht.

5. Verfahren nach einem der Ansprüche 1 bis 4,
wobei die aufgeladene Speichervorrichtung zumindest Energie in Höhe der halben Mindestleistung über zumindest die halbe Mindestbetriebsdauer liefern kann.

6. Verfahren nach einem der Ansprüche 1 bis 5,
f) wobei ausgehend vom Bereitschaftszustand eine Ausfallbedingung festgelegt wird, bei der die prognostizierte Lieferleistung für einen Ausfallzeitraum geringer als die Hilfsleistung ist,
- wobei der mit der Wahrscheinlichkeit gewichtete Ausfallzeitraum länger als die 3-fache oder 5-fache Hochlaufzeitspanne ist, oder
- wobei die Betriebsbedingung nach dem Ausfallzeitraum nicht erfüllt ist, oder
- wobei die in der Speichervorrichtung gespeicherte Energie nicht ausreichend ist zum Betrieb der Hilfssysteme über den Ausfallzeitraum;
g) wobei bei der Ausfallbedingung das Hilfssystem in den Ruhezustand wechselt und ansonsten eine fehlende Hilfsleistung von der Speichervorrichtung zugeführt wird.

7. Verfahren nach einem der Ansprüche 1 bis 6,
h) wobei ausgehend vom Betriebszustand eine Stoppbedingung festgelegt wird, bei der die prognostizierte Lieferleistung für einen Mangelzeitraum geringer als die Mindestleistung ist,
- wobei die Betriebsbedingung nach dem Mangelzeitraum nicht erfüllt ist, oder
- wobei der zulässige Mangelzeitraum definiert wird durch die Lieferfähigkeit der Speichervorrichtung in Höhe der Mindestleistung begrenzt bis zu einem unteren Grenzwert zum Ende des Mangelzeitraums zwischen 5% bis 25% der Speicherkapazität und/oder zwischen 5% bis 25% des vor dem Mangelzeitraum gegebenen Ladezustands;
i) wobei bei der Stoppbedingung die Elektrolyseeinheit in den Bereitschaftszustand wechselt und ansonsten eine fehlende Mindestleistung von der Speichervorrichtung zugeführt wird.

8. Verfahren nach einem der Ansprüche 1 bis 7,
wobei die Elektrolyseanlage zumindest zwei oder mehr Elektrolyseeinheiten umfasst, wobei sich die vorherigen Bedingungen auf eine erste Elektrolyseeinheit beziehen und jede weitere Elektrolyseeinheit eine der jeweiligen Elektrolyseeinheit zugeordnete Startbedingung und/oder Betriebsbedingung und/oder Stoppbedingung und/oder Ausfallbedingung mit entsprechenden zugeordneten Zeiträumen aufweist.

9. Verfahren nach Anspruch 8,
wobei die Elektrolyseeinheiten in Abhängigkeit von der prognostizierten Lieferleistung und/oder der Kapazität und dem Ladezustand der Speichervorrichtung sukzessive ein- oder ausgeschaltet werden.

## Claims

1. A method for controlling an electrolysis plant having an idle state and a ready state and an operating state, comprising
- auxiliary systems which have a total specific auxiliary power and are switched on in the ready state and in the operating state, and have a specific start-up period for switching from the idle state to the ready state and a specific switch-off period for switching from the ready state to the idle state, and are designed for a start-up period of a maximum of 4 hours and a switch-off period of a maximum of 4 hours; and
- at least one electrolysis unit which has a specific minimum power including the auxiliary power and generates hydrogen and oxygen in the operating state and has a defined minimum operating time between 0.25 hours and 4 hours; and
- at least one current source which supplies current at changing times and changing time periods with changing supply power; and
- at least one storage device; and
- at least one backup unit integrated in the storage device, comprising a battery storage;
wherein sufficient charging of the battery storage is provided if energy for outputting at least the auxiliary power can be made available over at least the switch-off period;
wherein, in case of a sufficient probability, the determined probability is above 80%, and, in case of a high probability, is above 95%;
a) wherein, starting from the idle state, a start condition is defined in which
- a projected supply power is sufficiently likely to exceed the auxiliary power for at least the start-up period, and
- then that time period with a projected supply power above the minimum power multiplied by its probability corresponds to at least 1.5 times the minimum operating time, and
- the battery storage can also be sufficiently charged with sufficient probability until the end of the minimum operating time;
b) wherein, starting from the ready state, an operating condition is defined in which
- the projected supply power is sufficiently likely to exceed the minimum power for the minimum operating time, and
- in case of a sufficient probability, the battery storage can be sufficiently charged at the latest by the end of half the minimum operating time, or, in case of a high probability, at the latest by the end of the minimum operating time;
c) wherein, based on the current available supply power, a forecast of the expected course of a projected supply power continuously created;
d) wherein, in the idle state, the ready state is switched into if the start condition is met, and
e) wherein, in the ready state, the operating state is switched into, if the operating condition is met; and
f) wherein energy supplied by the current source and not consumed by the auxiliary system or the electrolysis unit is supplied to the battery storage.

2. The method according to claim 1,
wherein the start-up period is at least 0.5 hours and at most 2 hours; and/or
wherein the minimum operating time is between 0.5 hours and 2 hours.

3. The method according to claim 1 or 2,
a') wherein a start condition is defined in which
- the projected supply power is highly likely to exceed the auxiliary power for at least the start-up period; and/or
- the projected supply power, optionally supplemented by a compensatory power until surpassing the minimum power, is highly likely to exceed the auxiliary power; and/or
- reaching the minimum power with the required duration is achieved by the projected supply power at the latest after 4 times the start-up period; and/or
- then that time period with a projected supply power above the minimum power multiplied by its probability corresponds to at least 2.5 times the minimum operating time.

4. The method according to any one of claims 1 to 3,
b') wherein an operating condition is defined in which
- the projected supply power is highly likely to exceed the minimum power for the minimum operating time, and
- the time period with a projected supply power above the minimum power multiplied by its probability corresponds to at least 2 times the minimum operating time.

5. The method according to any one of claims 1 to 4,
wherein the charged storage device can supply energy at the level of at least half the minimum power over at least half the minimum operating time.

6. The method according to any one of claims 1 to 5,
f) wherein, starting from the ready state, a failure condition is defined in which the projected supply power for a failure period is lower than the auxiliary power,
- wherein the failure period weighted with the probability is longer than 3 times or 5 times the start-up period; or
- wherein the operating condition is not met after the failure period, or
- wherein the energy stored in the storage device is not sufficient for operating the auxiliary systems over the failure period;
g) wherein, in case of the failure condition, the auxiliary system switches to the idle state, and otherwise a missing auxiliary power is supplied from the storage device.

7. The method according to any one of claims 1 to 6,
h) wherein, starting from the operating state, a stop condition is defined in which the projected supply power for a shortage period is lower than the minimum power,
- wherein the operating condition is not met after the shortage period, or
- wherein the allowable shortage period is defined by the supply capability of the storage device at the level of the minimum power limited to a lower threshold at the end of the shortage period of between 5% to 25% of the storage capacity and/or between 5% to 25% of the state of charge prior to the shortage period;
i) wherein, in case of the stop condition, the electrolysis unit switches to the ready state, and otherwise a missing minimum power is supplied from the storage device.

8. The method according to any one of claims 1 to 7,
wherein the electrolysis plant comprises at least two or more electrolysis units, wherein the previous conditions relate to a first electrolysis unit and each further electrolysis unit has a start condition and/or operating condition and/or stop condition and/or failure condition associated with the respective electrolysis unit with corresponding associated time periods.

9. The method according to claim 8,
wherein the electrolysis units are successively switched on or off as a function of the projected supply power and/or the capacity and the state of charge of the storage device.

## Revendications

1. Procédé de commande d'une installation d'électrolyse avec un mode arrêt, un mode veille et un mode fonctionnement, comprenant
- des systèmes auxiliaires qui, au total, ont une puissance auxiliaire spécifique et sont allumés en mode veille et en mode fonctionnement, et ont une période de démarrage spécifique pour passer du mode arrêt au mode veille et une période d'arrêt spécifique pour passer du mode veille au mode arrêt, et sont conçus pour une période de démarrage maximale de 4 heures et une période d'arrêt maximale de 4 heures ; et
- au moins une unité d'électrolyse qui a une puissance minimale spécifique, y compris l'énergie auxiliaire, et produit de l'hydrogène et de l'oxygène en mode de fonctionnement et a une durée de fonctionnement minimale définie comprise entre 0,25 heure et 4 heures ; et
- au moins une source d'énergie qui fournit de l'énergie à des moments et des périodes variables avec une puissance de sortie variable ; et
- au moins un dispositif de stockage ; et
- au moins une unité de réserve intégrée au dispositif de stockage comprenant un dispositif de stockage à batterie ; dans lequel une charge suffisante du dispositif de stockage de batterie est donnée si de l'énergie peut être rendue disponible pour fournir au moins l'énergie auxiliaire pendant au moins la période d'arrêt ;
dans lequel, dans le cas d'une probabilité suffisante, la probabilité déterminée est supérieure à 80 % et dans le cas d'une probabilité élevée, la probabilité déterminée est supérieure à 95 % ;
a) dans lequel, à partir du mode arrêt, une condition de démarrage est définie dans laquelle
- une puissance de livraison prévue pour au moins la période de démarrage est, avec une probabilité suffisante, supérieure à la puissance auxiliaire, et
- puis la période avec une puissance de livraison prévue supérieure à la puissance minimale multipliée par la probabilité correspond à au moins 1,5 fois la période de fonctionnement minimale, et
- avec une probabilité suffisante, le système de stockage de batterie puisse être suffisamment chargé jusqu'à la fin de la durée de fonctionnement minimale ;
b) dans lequel, à partir du mode veille, une condition de fonctionnement est définie dans laquelle
- la puissance de livraison prévue est supérieure à la puissance minimale avec une probabilité suffisante pendant la durée de fonctionnement minimale, et
- le système de stockage de batterie peut être suffisamment chargé, avec une probabilité suffisante, au plus tard à la fin de la moitié de la période de fonctionnement minimale ou, avec une probabilité élevée, au plus tard à la fin de la période de fonctionnement minimale ;
c) dans lequel, sur la base de la puissance de livraison actuellement disponible, une prévision est établie en continu concernant l'évolution attendue d'une puissance de livraison prévue ;
d) dans lequel dans le mode arrêt, si la condition de démarrage est remplie, le système passe au mode veille et
e) dans lequel, dans le mode veille, le mode fonctionnement est modifié lorsque la condition de fonctionnement est remplie ; et
f) dans lequel l'énergie fournie par la source d'alimentation et non consommée par le système auxiliaire ou l'unité d'électrolyse est injectée dans le stockage de la batterie.

2. Procédé selon la revendication 1,
dans lequel le temps de démarrage est d'au moins 0,5 heure et d'au plus 2 heures ; et/ou
dans lequel la durée minimale de fonctionnement est comprise entre 0,5 heure et 2 heures.

3. Procédé selon la revendication 1 ou 2,
a') dans lequel une condition de démarrage est spécifiée dans laquelle
- la puissance de production prévue pour au moins la période de démarrage est très probablement supérieure à la puissance auxiliaire ; et/ou
- la puissance de production prévue, complétée le cas échéant par une puissance de remplacement dépassant la puissance minimale, est très probablement supérieure à la puissance auxiliaire ; et/ou
- l'obtention de la performance minimale avec la durée requise grâce aux prévisions de puissance de livraison est obtenue après un maximum de 4 fois la période de montée en puissance ; et/ou
- puis la période avec une puissance de livraison prévue supérieure à la puissance minimale multipliée par la probabilité correspond au moins à 2,5 fois la durée minimale d'exploitation.

4. Procédé selon l'une quelconque des revendications 1 à 3,
b') par lequel une condition de fonctionnement est spécifiée dans laquelle
- la puissance de livraison prévue est susceptible de dépasser la puissance minimale pour la période de fonctionnement minimale et
- la période avec une puissance de livraison prévue supérieure à la puissance minimale multipliée par sa probabilité correspond au moins au double de la période minimale de fonctionnement.

5. Procédé selon l'une quelconque des revendications 1 à 4, dans lequel le dispositif de stockage chargé peut fournir une énergie au moins égale à la moitié de la puissance minimale pendant au moins la moitié de la durée de fonctionnement minimale.

6. Procédé selon l'une quelconque des revendications 1 à 5,
f) dans lequel, à partir du mode veille, une condition de défaillance est définie dans laquelle la puissance de livraison prévue pour une période de défaillance est inférieur à la puissance auxiliaire,
- dans lequel la période de défaillance pondérée par la probabilité est supérieure à 3 ou 5 fois la période de démarrage, ou
- dans lequel la condition de fonctionnement n'est pas remplie après la période de défaillance, ou
- dans lequel l'énergie stockée dans le dispositif de stockage est insuffisante pour faire fonctionner les systèmes auxiliaires pendant la période de défaillance ;
g) dans lequel, dans la condition de défaillance, le système auxiliaire passe en mode veille et, dans le cas contraire, une alimentation auxiliaire manquante est fournie par le dispositif de stockage.

7. Procédé selon l'une quelconque des revendications 1 à 6,
h) dans lequel, à partir du mode fonctionnement, une condition d'arrêt est définie dans laquelle la puissance fournie prévue pour une période de défaillance est inférieure à la puissance minimale,
- dans lequel la condition de fonctionnement n'est pas remplie après la période de défaillance, ou
- dans lequel la période de défaillance admissible est définie par la puissance de livraison du dispositif de stockage, limitée à une valeur minimale à la fin de la période de défaillance comprise entre 5 % et 25 % de la capacité de stockage et/ou entre 5 % et 25 % de l'état de charge avant la période de défaillance ;
i) dans lequel, dans le mode arrêt, l'unité d'électrolyse passe au mode veille et sinon, une puissance minimale manquante est fournie par le dispositif de stockage.

8. Procédé selon l'une quelconque des revendications 1 à 7, dans lequel l'installation d'électrolyse comprend au moins deux ou plusieurs unités d'électrolyse, dans laquelle les conditions précédentes se rapportent à une première unité d'électrolyse et chaque autre unité d'électrolyse a une condition de démarrage et/ou une condition de fonctionnement et/ou une condition d'arrêt et/ou une condition de défaillance associée à l'unité d'électrolyse respective avec des durées associées correspondantes.

9. Procédé selon la revendication 8,
dans lequel les unités d'électrolyse sont successivement allumées ou éteintes en fonction de la puissance de distribution prévue et/ou de la capacité et de l'état de charge du dispositif de stockage.
